# EUROPÄISCHE PATENTSCHRIFT

(11) **EP 3 173 204 B1**
(45) Veröffentlichungstag und Bekanntmachung des Hinweises auf die Patenterteilung: **26.05.2021**
(21) Anmeldenummer: 16198228.5
(22) Anmeldetag: 10.11.2016
(51) Int. Cl.: B29C 39/08, B29C 70/84, B29C 39/10, B29C 39/22

(54) **UNIVERSELL EINSETZBARER ZENTRIFUGENTELLER ZUM VERGIESSEN VON GEHÄUSEENDEN VON HOHLFASERFILTERMODULEN**
UNIVERSAL CENTRIFUGE TURNTABLE FOR POTTING ENDS OF HOLLOW FIBRE FILTERING MODULES
DISQUE ROTATIF UNIVERSEL DESTINÉ AU SURMOULAGE D'EXTRÉMITÉS DE BOÎTIER DE MODULES DE FILTRE À FIBRES CREUSES

(30) Priorität: 30.11.2015 DE 102015120761
(43) Veröffentlichungstag der Anmeldung: 31.05.2017
(73) Patentinhaber: B. Braun Avitum AG, 34212 Melsungen (DE)
(72) Erfinder: KÄSTNER, Falk, 01900 Bretnig-Hauswalde (DE)
(74) Vertreter: Winter, Brandl - Partnerschaft mbB

(56) Entgegenhaltungen:
- CN-U- 203 425 930
- DE-A1- 2 711 995
- JP-A- S6 040 066
- JP-A- S51 103 083
- JP-A- S59 150 503
- JP-A- 2011 020 036
- KR-A- 20120 088 109
- US-A- 4 227 295

## Beschreibung

Die Erfindung betrifft einen Zentrifugenteller zum Vergießen von Gehäuseenden von Hohlfaserfiltermodulen, der universell einsetzbar ist.

Bei der Herstellung von Hohlfaserfiltermodulen nach dem Stand der Technik sind Herstellungsverfahren bekannt, bei denen man die Gehäuseenden eines mehr oder weniger langgestreckten und hohlzylinderförmigen Gehäuses eines Hohlfaserfiltermoduls mit darin in Längsrichtung aufgenommenen Hohlfasern mit einer Vergussmasse vergießt. Es ist bekannt, beide Enden eines Gehäuses gleichzeitig unter Verwendung einer Zentrifuge zu vergießen. Infolge der darin wirkenden Zentripetalkraft sammelt sich die Vergussmasse an beiden Enden des Gehäuses an. Dazu wird ein Gehäuse eines Hohlfaserfiltermoduls mit einem darin eingezogenen Faserbündel und montierter Gießkappe auf einem Zentrifugenteller so gelagert, dass die Längsachse des Filtergehäuses zentrisch und senkrecht zur Zentrifugenachse steht. Es ist des Weiteren bekannt, zwei Filtergehäuse in einem Winkel von 90° zueinander versetzt übereinander auf einem Zentrifugenteller anzuordnen und zum Vergießen zu lagern. Mittels eines über dem Filtergehäuse bzw. den Filtergehäusen montierten Verteilers wird eine Vergussmasse zu den Gehäuseenden geleitet und in die Gehäuseenden eingebracht. Beim Vergießen rotiert der Zentrifugenteller, so dass die Vergussmasse mit Hilfe der Zentrifugalkraft in Richtung der Gehäuseenden verlagert wird und beide Gehäuseenden gleichzeitig vergossen werden können.

Will man unterschiedliche Filtergehäuse, also zum Beispiel Filtergehäuse unterschiedlicher Geometrie oder unterschiedlicher Abmessungen, zum Zwecke des Vergießens der Gehäuseenden auf einem einzigen Zentrifugenteller lagern, insbesondere derart lagern, dass die Gehäuse zum Beispiel durch Formschluss stabil gehalten sind, kann man das durch Verwendung entsprechender spezifisch im Hinblick auf das jeweilige Gehäuse ausgebildeter Gehäuseauflagen erreichen. Aktuell sind solche Gehäuseauflagen als Wechselteile ausgeführt und müssen je nach zu vergießendem Gehäuse manuell ausgetauscht werden. Es ist ein besonderer Nachteil, dass unter Verwendung derartiger Wechselteile eine automatische Fertigung, insbesondere ein automatisches Vergießen von Hohlfaserfiltermodulgehäusen nicht möglich ist.

Für eine automatisierte, insbesondere vollautomatisierte Fertigung ist eine entsprechende Gehäuseauflage ohne Wechselteile zu realisieren und möglichst unkompliziert einzustellen. Es sind zwei unterschiedliche Konzepte eines Zentrifugentellers mit einstellbarer Gehäuseauflage bekannt, die dieses ermöglichen sollen. Zum einen ist ein Drehteller mit den unterschiedlichen Auflagen, die jeweils vertikal angeordnet sind, bekannt. Dieser Zentrifugenteller baut jedoch sehr hoch und benötigt einen hohen technischen Aufwand für einen automatisierten Produktwechsel. Zum anderen ist ein Zentrifugenteller mit einem Drehkranz bekannt, bei dem unterschiedliche Auflagen zentral horizontal auf einem Zentrifugenteller angebracht sind. Dieser bietet jedoch leider nicht ausreichend Platz für eine automatisierte Bestückung in der Zentrifuge. Insgesamt erfüllen bekannte Vorrichtungen die genannten Anforderungen bezüglich Baugröße und automatisierter Bestückung und Verstellung leider nur unzureichend.

Stand der Technik findet sich in JP S59 150503 A, welche einen Rotationstisch zum Vergießen von Dialysatorgehäusen betrifft, auf welchem mehrere Lagerelemente drehbar angeordnet sind, in welche jeweils ein Dialysatorgehäuse eingesetzt und in drei Schritten erst ein Gehäuseende vergossen wird, dann die Lagerelemente um 180° mitsamt den Dialysatorgehäusen gedreht werden und schließlich das andere Gehäuseelement vergossen wird.

Ferner CN 203 425 930 U zeigt eine Vorrichtung zum Abdichten eines Dialysators durch Zentrifugalkräfte, wobei auf einer Rotorscheibe Lagersitze fest angebracht sind, welche das Dialysatorgehäuse lagern.

DE 27 11 995 A1 offenbart einen Dialysator sowie ein Verfahren zur Herstellung desselben, wobei mehrere Dialysatorgehäuse (2) radial ausgerichtet am Rand einer Drehscheibe (53) in Haltern (55) aufgenommen werden und die Enden der Dialysatoren durch Zentrifugalkräfte vergossen werden.

JP S51 103083 A zeigt eine Vorrichtung zum Vergießen von Dialysatorgehäusen auf einem Drehteller, wobei mehrere Dialysatorgehäuse parallel oder orthogonal übereinander befestigt sein und gleichzeitig vergossen werden können.

Ausgehend von dem vorstehend beschriebenen Stand der Technik liegt der vorliegenden Erfindung die Aufgabe zugrunde, die zuvor angeführten Nachteile zu beseitigen, insbesondere einen universell einsetzbaren Zentrifugenteller von geringer Baugröße und einfacher Konstruktion und Handhabung für eine vorzugsweise vollautomatisierte Bestückung mit verschiedenen Filtergehäusen ggf. gleicher Länge (Diacap pro 13, 16, und 19) bereitzustellen. Dabei sollte ein bereits vorhandener Verteilerstern, über den eine Vergussmasse den zu vergießenden Gehäusen zugeführt wird, mit formschlüssiger Fixierung auf einheitlicher Höhe verwendbar sein.

Nach der Erfindung wird diese Aufgabe gelöst durch einen Zentrifugenteller zum Vergießen von Gehäuseenden von Hohlfaserfiltermodulen, der um eine Zentrifugenachse rotierbar ist, mit zumindest zwei diametral zur Zentrifugenachse angeordneten Lagerelementen zum Lagern (Halten, Fixieren, Aufnehmen) eines Gehäuses eines zu vergießenden Hohlfaserfiltermoduls, der dadurch gekennzeichnet ist, dass jedes Lagerelement jeweils um eine zur Zentrifugenachse parallele Lagerachse drehbar am Zentrifugenteller gelagert ist. Die Drehachse der Lagerelemente könnte auch zur Mitte gekippt sein, wodurch die jeweils genutzte Aufnahmeposition höher steht. Ein Lagerkopf mit unterschiedlichen Aufnahmestrukturen zur Aufnahme von Gehäusen mit unterschiedlichen Abmessungen ist vorgesehen, wobei durch Verdrehen der Lagerelemente um die jeweilige Lagerachse die unterschiedlichen Aufnahmestrukturen von einander zugewiesenen Lagerelementen zueinander relativpositionierbar sind.

Es ist ein besonderer Vorteil der Erfindung, dass Elemente und Einheiten bekannter Zentrifugenteller, wie zum Beispiel Haltebolzen, Verteilerstern und axiale Gehäuseklemmung, weitgehend auch im Rahmen der Erfindung genutzt werden können. So kann auf Bewährtes zurückgegriffen werden, während gleichzeitig die mit der Erfindung bewirkten Vorteile genutzt werden können. Nach der Erfindung sind anstelle von Haltern mit austauschbaren Gehäuseauflagen die drehbaren

Lagerelemente angeordnet oder ausgebildet. Sie können insbesondere in Form von Drehtellern ausgebildet sein. Infolge der drehbaren Anordnung der Lagerelemente können diese einfach zueinander und zum Zentrifugenteller relativpositioniert werden. Dabei wird die Zugänglichkeit zu den Lagerelementen nicht beschränkt. Dies eröffnet die Möglichkeit, dass unterschiedliche Gehäusegeometrien in einem universellen Zentrifugenteller aufgenommen und vergossen werden können, wobei durch die Ausrichtung der Lagerelemente der Zentrifugenteller einfach auf unterschiedliche Gehäuse adaptiert werden kann.

Die Einstellung der Lagerelemente erfolgt vorzugsweise vor dem Beladen durch ein automatisiertes Handling von oben. Alternativ kann es manuell von Hand durchgeführt werden oder von unten erfolgen. Zur Adaptierung an unterschiedlichen Gehäuse werden die Lagerelemente einfach um ihre Drehachse verschwenkt oder gedreht und können so miteinander in unterschiedlichen Aufnahmepositionen positioniert oder ausgerichtet werden, wobei jede Aufnahmeposition zur Aufnahme einer bestimmten Gehäuseart ausgebildet, eingerichtet und bestimmt ist. Die für die jeweils erforderliche Ausrichtung der Lagerelemente notwendigen Informationen kann durch ein Maschinen-Kontrollsystem bereitgestellt und kontrolliert werden. Die Positionierung der Lagerelemente kann visuell und/oder maschinell erfasst werden.

Vorteilhafte Ausführungsformen der Erfindung sind in den Unteransprüchen beansprucht und werden nachfolgend näher erläutert.

Nach einer Ausführungsform der Erfindung ist zumindest eines der Lagerelemente derart gelagert, dass seine jeweilige Winkelposition zur Lagerachse durch Verrasten festlegbar ist. Die Lagerelemente können zu diesem Zweck mit einer Verrastung oder Rasteinheit für die Positionierung ausgestattet sein oder mittelbar oder unmittelbar mit einer solchen Verrastung oder Rasteinheit zusammenwirken. Es ist ein besonderer Vorteil, dass die jeweilige Position eines Lagerelements, die es zum Aufnehmen und Lagern eines bestimmten Gehäuses einnehmen muss, verlässlich und hochgenau reproduzierbar einstellbar und auswählbar ist.

Eine Ausführungsform der Erfindung ist dadurch gekennzeichnet, dass die Lagerelemente jeweils mittels eines Achsbolzens oder Achszapfens an einer um die Zentrifugenachse rotierbaren Basis, zum Beispiel in Form eines Tellers, einer Scheibe oder einer beliebigen anderen Struktur, angeordnet sind. Bei der Verwendung eines solchen Achszapfens kann auf bewährte Lagerungsmittel wie Axiallager, Radiallager oder Gleitlager zurückgegriffen werden. Des Weiteren ist es von Vorteil, dass Achsbolzen oder Achszapfen von unterschiedlicher Länge an der Basis angeordnet werden können. Auf diese Weise kann eine Mehrzahl an Gehäusen an einem Zentrifugenteller aufgenommen werden, wobei die Gehäuse in Richtung der Zentrifugenachse übereinanderliegend angeordnet sind.

Nach einer Ausführungsform der Erfindung weisen die Lagerelemente jeweils einen Lagerkopf auf, der in einer Ebene quer zur Lagerachse des betreffenden Lagerelements einen vier-, sechs- oder achteckige Querschnitt, vorzugsweise in Form eines Quadrats, eines regelmäßigen Hexagons oder in Form eines regelmäßigen Oktagons, mit einer entsprechenden Anzahl an in Tangentialebenen zur Lagerachse ausgebildeten Außenwänden aufweist, wobei er natürlich auch rund sein kann. Durch Verdrehen der Lagerelemente um die jeweilige Drehachse können die unterschiedlichen Außenwände von einander zugewiesenen Lagerelementen zueinander relativpositioniert werden.

Nach einer weiteren Ausführungsform weist der Lagerkopf zur Aufnahme unterschiedlicher Gehäusen vorzugsweise an seiner von der Basis abgewandten Seite eine Mehrzahl unterschiedlich geformter (ausgebildeter) Aufnahmestrukturen (Vertiefungen, Ausnehmungen) auf. Diese sind jeweils zur Aufnahme eines der Gehäuse bestimmt und ausgebildet, insbesondere für Gehäuse unterschiedlicher Abmessungen. Man kann auch sagen, dass ein Lagerkopf mit unterschiedlichen Gehäuseauflagen montiert ist. Durch Verdrehen der Lagerelemente um die jeweilige Drehachse können die unterschiedlichen Aufnahmestrukturen von einander zugewiesenen Lagerelementen zueinander relativpositioniert werden.

Es ist von besonderem Vorteil, wenn diametral zur Lagerachse einander gegenüberliegende Aufnahmestrukturen zur Aufnahme eines Gehäuses bestimmter Abmessungen ausgebildet sind. Auf diese Weise ist ein Gehäuse sicher auf beiden Seiten der Zentrifugendrehachse gehalten, was besonders stabil ist.

Zumindest eines der Lagerelemente kann um seine Lagerachse drehbar angetrieben sein. Ein Antrieb eines Lagerelements kann nach der Erfindung insbesondere pneumatisch, elektrisch oder hydraulisch erfolgen. Bei einer Fortbildung der Erfindung sind mehrere Lagerelemente miteinander wirkverbunden angetrieben.

Eine Form der Erfindung ist dadurch gekennzeichnet, dass der Zentrifugenteller vier, sechs oder acht Lagerelemente aufweist. Vorzugsweise sind zur Aufnahme eines Gehäuses jeweils zwei Lagerelemente vorgesehen, die mit Bezug auf die Zentrifugenachse einander diametral gegenüberliegend angeordnet sind.

Man kann auch sagen, dass die Grundidee, auf der die Erfindung beruht, ist, einen universell einsetzbaren Zentrifugenteller mit Gehäuseaufnahmen für unterschiedliche Filtergehäuse auszustatten. Das ermöglicht die Verwendung eines einheitlichen auf fester Hohe fixierten Verteilersternes. Ein derartiger Zentrifugenteller eignet sich besonders gut sowohl für eine manuelle als auch eine automatisierte Produktumstellung und Bestückung. Nach der Erfindung wird die Auflage von unterschiedlichen Gehäusen mit horizontal auf dem Zentrifugenteller gelagerten Drehtellern realisiert, auf denen sich die unterschiedlichen Gehäuseaufnahmen befinden. Durch die Erfindung können insbesondere die folgenden Vorteile bzw. Verbesserungen bewirkt werden:
Die erfindungsgemäße technische Lösung erfüllt als einzige bislang bekannte Lösung die durch eine automatisierte Fertigung entstehenden Anforderungen an einen Zentrifugenteller.

Der erfindungsgemäße Zentrifugenteller ist vollautomatisch in der Zentrifuge bestückbar und vollautomatisch in der Zentrifuge umstellbar.

Der erfindungsgemäße Zentrifugenteller besitzt eine nur geringe Baugröße.

Der erfindungsgemäße Zentrifugenteller ermöglicht eine Verwendung eines vorhandenen bekannten Verteilersternes mit einer Fixierung auf fester Höhe.

Kernstück der Erfindung ist die Idee, die auswechselbaren Gehäuseauflagen auf vertikalen Drehtellern zu platzieren, die unter den Gehäusen montiert sind. Durch das Verdrehen dieser Teller wird die gewünschte Gehäuseauflage positioniert.

Die Erfindung wird im Folgenden anhand einer beispielhaften, nicht einschränkenden und in der angehängten Figur gezeigten Ausführungsform näher erläutert.

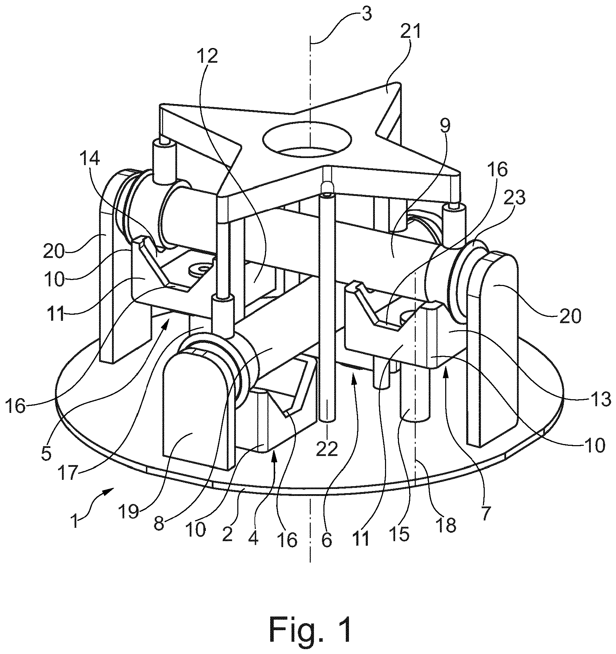

Die Figur zeigt einen Zentrifugenteller 1 nach der Erfindung in einer perspektivischen Ansicht. Dieser weist eine Basis 2, hier in Form einer kreisrunden Scheibe 2 auf. Die Basis 2 ist derart in einer nicht weiter dargestellten Zentrifuge gelagert oder zu lagern, dass sie um eine zur Kreisebene orthogonalen Zentrifugenachse 3 rotierbar ist.

Auf der Basis 2 sind im dargestellten Beispiel vier Lagerelemente 4, 5, 6, 7 angeordnet. Die Lagerelemente 4 und 6 sowie 5 und 7 bilden Lagerelementpaare, die jeweils einer Lagerung eines im Wesentlichen zylinderförmigen Gehäuses 8 bzw. 9 eines zu vergießenden Hohlfaserfiltermoduls dienen. Die Lagerelemente 4 und 6 liegen mit Bezug auf die Zentrifugenachse 3 einander diametral gegenüber. Die Lagerelemente 5 und 7 liegen ebenfalls mit Bezug auf die Zentrifugenachse 3 einander diametral gegenüber. Das Paar der Lagerelemente 4 und 6 ist gegenüber dem Paar der Lagerelemente 5 und 7 um einen Winkel von 90° in der Ebene der Basis 2 gedreht.

Jedes der Lagerelemente 4, 5, 6, 7 weist einen Lagerkopf 10 auf. Dieser weist in einer Ebene parallel zur Basis 2 und quer zur Zentrifugenachse 3 einen quadratischen Querschnitt auf. Der Lagerkopf 10 besitzt in der Folge vier Seitenwände 11, 12, 13, 14, in denen jeweils eine Aufnahmestruktur 15 hier in Form einer randseitigen Ausnehmung in der Seitenwand ausgebildet ist. Die in der jeweiligen Seitenwand 11, 12, 13, 14 ausgebildeten Aufnahmestrukturen 15 unterscheiden sich voneinander und dienen jeweils der Aufnahme eines bestimmten Gehäusetyps oder einer bestimmten Gehäuseform. So kann zum Beispiel die Aufnahmestruktur 15 der Seitenwand 11 zur Aufnahme von Gehäusen mit einem Gehäuseaußendurchmesser D1, die Aufnahmestruktur 15 der Seitenwand 12 zur Aufnahme von Gehäusen mit einem Gehäuseaußendurchmesser D2, die Aufnahmestruktur 15 der Seitenwand 13 zur Aufnahme von Gehäusen mit einem Gehäuseaußendurchmesser D3 und die Aufnahmestruktur 15 der Seitenwand 14 zur Aufnahme von Gehäusen mit einem Gehäuseaußendurchmesser D4 eingerichtet und ausgebildet sein.

Erfindungsgemäß ist das Lagerelement 4, 5, 6, 7 um eine Drehachse 15 drehbar, die sich parallel zur Zentrifugenachse 3 und mittig durch das entsprechende Lagerelement 4, 5, 6, 7 erstreckt. In der Figur ist aus Gründen einer besseren Übersichtlichkeit nur die Drehachse 15 des Lagerelements 7 beispielhaft eingezeichnet. Es sei darauf hingewiesen, dass im Rahmen der Erfindung entweder das gesamte Lagerelement 4, 5, 6,7 um seine Drehachse 15 oder nur sein Lagerkopf 10 darum drehbar ausgebildet sein kann.

Infolge der Drehbarkeit der Lagerelemente 4, 5, 6, 7 können die jeweils gleichen oder einander entsprechenden Seitenwände 11, 12, 13, 14 der Lagerköpfe 10 des Lagerelementpaars 4, 6 bzw. des Lagerelementpaars 5, 7 einander zugerichtet werden, d.h. in Richtung der Zentrifugenachse 3 ausgerichtet werden. Auf diese Weise können mit einem vierseitigen Lagerkopf 10 mit vier unterschiedlichen Aufnahmestrukturen 16 zwei oder vier unterschiedliche Gehäusearten am Zentrifugenteller 1 gelagert werden, je nach dem, ob die Gehäuse nur in einer Aufnahmestruktur 16 oder (wie gezeigt) in zwei Aufnahmestrukturen gehalten sind.

Die Lagerelemente 5 und 7 sind mit relativ langen Lagerzapfen 17, 18 an der Basis 2 gelagert. Die Lagerelemente 4 und 6 sind mit relativ kurzen Lagerzapfen an der Basis 2 gelagert, die im vorliegenden Beispiel so kurz sind, dass sie in der Figur durch den Lagerkopf 10 verdeckt und nicht sichtbar sind. Infolge der unterschiedlichen Länge der Lagerzapfen können die Gehäuse 8, 9 in der in der Figur gezeigten Weise in Richtung der Zentrifugenachse 3 übereinander zum Vergießen angeordnet werden.

Zur Klemmung der aufgenommenen Gehäuse 8, 9 in axialer Richtung weist der Zentrifugenteller 1 radial außen bezüglich der Lagerelemente 4, 5, 6, 7 zusätzliche Halter 19 und 20 auf, die in ihrer Länge auf die Länge des entsprechenden Lagerelements 4, 5, 6, 7 abgestimmt sind. Zum Zuführen und Verteilen der Vergussmasse zu den jeweiligen Enden der Gehäuse 8, 9 ist an der Basis 2 ein Verteiler oder Verteilerstern 21 angeordnet. Dieser besitzt in der Figur nicht dargestellte Leitungen für die Vergussmasse, mit denen diese über eine als Haltebolzen 22 ausgebildete Zuführung zu an den Gehäusen 8, 9 angeordneten Gießkappen 23 geführt wird.

### Bezugszeichen

- 1: Zentrifugenteller
- 2: Basis, Scheibe
- 3: Zentrifugenachse
- 4: Lagerelement
- 5: Lagerelement
- 6: Lagerelement
- 7: Lagerelement
- 8: Gehäuse
- 9: Gehäuse
- 10: Lagerkopf
- 11: Seitenwand
- 12: Seitenwand
- 13: Seitenwand
- 14: Seitenwand
- 15: Drehachse
- 16: Aufnahmestruktur
- 17: Lagerzapfen, Achsbolzen
- 18: Lagerzapfen, Achsbolzen
- 19: Halter
- 20: Halter
- 21: Verteilerstern
- 22: Haltebolzen
- 23: Gießkappe

## Patentansprüche

1. Zentrifugenteller (1) zum Vergießen von Gehäuseenden von Hohlfaserfiltermodulen, der um eine Zentrifugenachse (3) rotierbar ist, mit zumindest zwei diametral zur Zentrifugenachse (3) angeordneten Lagerelementen (4, 5, 6, 7) zum Lagern eines Gehäuses (8, 9) eines zu vergießenden Hohlfaserfiltermoduls, wobei jedes Lagerelement (4, 5, 6, 7) jeweils um eine zur Zentrifugenachse (3) parallele Lagerachse (15) drehbar am Zentrifugenteller (1) gelagert ist,
**dadurch gekennzeichnet, dass**
ein Lagerkopf (10) mit unterschiedlichen Aufnahmestrukturen (16) montiert ist, die zur Aufnahme von Gehäusen (8, 9) mit unterschiedlichen Abmessungen vorgesehen sind, wobei durch Verdrehen der Lagerelemente (4, 5, 6, 7) um die jeweilige Lagerachse (15) die unterschiedlichen Aufnahmestrukturen (16) von einander zugewiesenen Lagerelementen (4, 5, 6, 7) zueinander relativpositionierbar sind.

2. Zentrifugenteller (1) nach Anspruch 1, **dadurch gekennzeichnet, dass** zumindest eines der Lagerelemente (4, 5, 6, 7) derart gelagert ist, dass seine jeweilige Winkelposition zur Lagerachse (15) durch Verrasten festlegbar ist.

3. Zentrifugenteller (1) nach Anspruch 1 oder 2, **dadurch gekennzeichnet, dass** die Lagerelemente (4, 5, 6, 7) jeweils mittels eines Achsbolzen (17, 18) an einer um die Zentrifugenachse (3) rotierbaren Basis (2) angeordnet sind.

4. Zentrifugenteller (1) nach einem der vorstehenden Ansprüche, **dadurch gekennzeichnet, dass** die Lagerelemente (4, 5, 6, 7) jeweils den Lagerkopf (10) aufweisen, der in einer Ebene quer zur Lagerachse (15) des betreffenden Lagerelements (4, 5, 6, 7) einen vier-, sechs- oder achteckige Querschnitt, vorzugsweise in Form eines Quadrats, eines regelmäßigen Hexagons oder in Form eines regelmäßigen Oktagons, mit einer entsprechenden Anzahl an in Tangentialebenen zur Lagerachse ausgebildeten Außenwänden (11, 12, 13, 14) aufweist.

5. Zentrifugenteller (1) nach einem der Ansprüche 1 bis 3, **dadurch gekennzeichnet, dass** der Lagerkopf (10) auch rund sein kann.

6. Zentrifugenteller (1) nach Anspruch 4 oder 5, **dadurch gekennzeichnet, dass** der Lagerkopf (10) zur Aufnahme von Gehäusen (8, 9) mit unterschiedlichen Abmessungen vorzugsweise an seiner von der Basis (2) abgewandten Seite die Mehrzahl unterschiedlich geformter Aufnahmestrukturen (16) aufweist, die jeweils zur Aufnahme eines der Gehäuse (8, 9) bestimmt und ausgebildet sind.

7. Zentrifugenteller (1) nach Anspruch 6, **dadurch gekennzeichnet, dass** der oder jeder Lagerkopf (10) dafür ausgebildet ist, durch ausgewähltes Drehen um seine Lagerachse (15) eine ausgewählte Aufnahmestruktur aus der Mehrzahl der unterschiedlich geformten Aufnahmestrukturen (16) für die Aufnahme eines entsprechenden Gehäuses (8, 9) zum Einsatz zu bringen.

8. Zentrifugenteller (1) nach einem der vorstehenden Ansprüche, **dadurch**
**gekennzeichnet, dass** diametral zur Lagerachse (15) einander gegenüberliegende Aufnahmestrukturen (16) zur Aufnahme eines Gehäuses (8, 9) bestimmter Abmessungen ausgebildet sind.

9. Zentrifugenteller (1) nach einem der vorstehenden Ansprüche, **dadurch**
**gekennzeichnet, dass** zumindest eines der Lagerelemente (4, 5, 6, 7) um seine Lagerachse (15) drehbar angetrieben ist, vorzugsweise pneumatisch, elektrisch oder hydraulisch angetrieben ist.

10. Zentrifugenteller (1) nach einem der vorstehenden Ansprüche, **dadurch**
**gekennzeichnet, dass** mehrere Lagerelemente (4, 5, 6, 7) miteinander wirkverbunden angetrieben sind.

11. Zentrifugenteller (1) nach einem der vorstehenden Ansprüche, **dadurch**
**gekennzeichnet, dass** dieser vier, sechs oder acht Lagerelemente (4, 5, 6, 7) aufweist.

## Claims

1. A centrifuge plate (1) which is intended for casting housing ends of hollow fiber filter modules and can be rotated around a centrifuge axis (3), comprising at least two bearing elements (4, 5, 6, 7) arranged diametrically with respect to the centrifuge axis (3) and provided for supporting a housing (8, 9) of a hollow fiber filter module to be cast, wherein each bearing element (4, 5, 6, 7) is rotatably supported on the centrifuge plate (1) around a bearing axle (15) which is parallel to the centrifuge axis (3),
**characterized in that**
a bearing head (10) including differently shaped receiving structures (16) is mounted, which structures are provided for receiving housings (8, 9) with different dimensions, wherein, by twisting the bearing elements (4, 5, 6, 7) around the respective bearing axle (15), the different receiving structures (16) are relative-positioned by bearing elements (4, 5, 6, 7) allocated to one another.

2. The centrifuge plate (1) according to claim 1, **characterized in that** at least one of the bearing elements (4, 5, 6, 7) is supported in such a manner that its respective angular position can be fixed with respect to the bearing axle (15) by snapping in place.

3. The centrifuge plate (1) according to claim 1 or 2, **characterized in that** the bearing elements (4, 5, 6, 7) each are arranged on a base (2) rotatable around the centrifuge axis (3) by way of an axle pin (17, 18).

4. The centrifuge plate (1) according to any of the preceding claims, **characterized in that** the bearing elements (4, 5, 6, 7) each have a bearing head (10) which, in a plane transverse to the bearing axle (15) of the respective bearing element (4, 5, 6, 7), has a quadrangular, hexagonal or octagonal cross-section preferably in the shape of a square, a regular hexagon or in the shape of a regular octagon, including a corresponding number of outer walls (11, 12, 13, 14) formed in tangential planes to the bearing axle.

5. The centrifuge plate (1) according to any of claims 1 to 3, **characterized in that** the bearing head (10) also may be round.

6. The centrifuge plate (1) according to any of claims 4 or 5, **characterized in that** the bearing head (10) for receiving housings (8, 9) of different dimensions has a plurality of differently shaped receiving structures (16), preferably on its side facing away from the base (2), which structures each are intended and formed for receiving one of the housings (8, 9).

7. The centrifuge plate (1) according to claim 6, **characterized in that** the bearing head or each bearing head (10) is designed to deploy a selected receiving structure from the plurality of the differently shaped receiving structures (16) for receiving a corresponding housing (8, 9) by selectively rotating it around its bearing axle (15).

8. The centrifuge plate (1) according to any of the preceding claims, **characterized in that** receiving structures (16) which are diametrically opposite to each other with respect to the bearing axle (15) are formed so as to receive a housing (8, 9) with defined dimensions.

9. The centrifuge plate (1) according to any of the preceding claims, **characterized in that** at least one of the bearing elements (4, 5, 6, 7) is driven so as to be able to rotate around its bearing axle (15), preferably in a pneumatic, electric or hydraulic manner.

10. The centrifuge plate (1) according to any of the preceding claims, **characterized in that** several bearing elements (4, 5, 6, 7) are in operative connection with one another.

11. The centrifuge plate (1) according to any of the preceding claims, **characterized in that** it comprises four, six or eight bearing elements (4, 5, 6, 7).

## Revendications

1. Plaque de centrifugeuse (1) pour l'enrobage d'extrémités de logement de modules filtrant à fibres creuses, qui peut tourner autour d'un axe de centrifugeuse (3), avec au moins deux éléments de palier (4, 5, 6, 7) disposés diamétralement à l'axe de centrifugeuse (3) pour monter un logement (8, 9) d'un module filtrant à fibres creuses à enrober, chaque élément de palier (4, 5, 6, 7) étant monté de manière à pouvoir pivoter sur la plaque de centrifugeuse (1) respectivement autour d'un axe de palier (15) parallèle à l'axe de centrifugeuse (3),
**caractérisée en ce que**
une tête de palier (10) est assemblée avec des structures d'accueil (16) différentes, qui sont prévues pour accueillir des logements (8, 9) de dimensions différentes, les structures d'accueil (16) différentes d'éléments de palier (4, 5, 6, 7) affectés les uns aux autres par rotation des éléments de palier (4, 5, 6, 7) autour de l'axe de palier (15) respectif étant relativement positionnables les uns aux autres.

2. Plaque de centrifugeuse (1) selon la revendication 1, **caractérisée en ce qu'**au moins l'un des éléments de palier (4, 5, 6, 7) est monté de sorte que sa position angulaire respective par rapport à l'axe de palier (15) peut être fixé par encliquetage.

3. Plaque de centrifugeuse (1) selon la revendication 1 ou 2, **caractérisée en ce que** les éléments de palier (4, 5, 6, 7) sont disposés respectivement au moyen d'un boulon d'essieu (17, 18) au niveau d'une base (2) pouvant tourner autour de l'axe de centrifugeuse (3).

4. Plaque de centrifugeuse (1) selon l'une quelconque des revendications précédentes, **caractérisée en ce que** les éléments de palier (4, 5, 6, 7) présentent respectivement la tête de palier (10), qui présente dans un plan transversal à l'axe de palier (15) de l'élément de palier (4, 5, 6, 7) correspondant une section transversale carrée, hexagonale ou octogonale, de préférence sous forme d'un carré, d'un hexagone régulier ou sous forme d'un octogone régulier, avec un nombre correspondant de parois extérieures (11, 12, 13, 14) formées dans le plan tangentiel à l'axe de palier.

5. Plaque de centrifugeuse (1) selon l'une quelconque des revendications 1 à 3, **caractérisée en ce que** la tête de palier (10) peut également être ronde.

6. Plaque de centrifugeuse (1) selon la revendication 4 ou 5, **caractérisée en ce que** la tête de palier (10) présente pour accueillir des logements (8, 9) de dimensions différentes de préférence au niveau de son côté opposé à la base (2) la pluralité de structures d'accueil (16) façonnées différemment, qui sont déterminées et formées respectivement pour l'accueil d'un des logements (8, 9).

7. Plaque de centrifugeuse (1) selon la revendication 6, **caractérisée en ce que** la ou chaque tête de palier (10) est formée pour utiliser grâce à la rotation choisie autour de son axe de palier (15) une structure d'accueil choisie parmi la pluralité de structures d'accueil (16) façonnées différemment pour l'accueil d'un logement correspondant (8, 9).

8. Plaque de centrifugeuse (1) selon l'une quelconque des revendications précédentes, **caractérisée en ce que** des structures d'accueil (16) mutuellement opposées pour l'accueil d'un logement (8, 9) de dimensions définies sont formées diamétralement à l'axe de palier (15).

9. Plaque de centrifugeuse (1) selon l'une quelconque des revendications précédentes, **caractérisée en ce qu'**au moins l'un des éléments de palier (4, 5, 6, 7) est entraîné en rotation autour de son axe de palier (15), de préférence est entraîné de manière pneumatique, électrique ou hydraulique.

10. Plaque de centrifugeuse (1) selon l'une quelconque des revendications précédentes, **caractérisée en ce que** plusieurs éléments de palier (4, 5, 6, 7) sont entraînés ensemble en liaison fonctionnelle.

11. Plaque de centrifugeuse (1) selon l'une quelconque des revendications précédentes, **caractérisée en ce que** celle-ci présente quatre, six ou huit éléments de palier (4, 5, 6, 7).
